# EUROPÄISCHE PATENTSCHRIFT

(11) **EP 1 285 926 B1**
(45) Veröffentlichungstag und Bekanntmachung des Hinweises auf die Patenterteilung: **12.05.2004**
(21) Anmeldenummer: 02015228.6
(22) Anmeldetag: 09.07.2002
(51) Int. Cl.: C07F 7/18

(54) **Organosiliciumverbindungen**
Organosilicon compounds
Composés Organosiliciés

(30) Priorität: 06.08.2001 DE 10137809; 22.12.2001 DE 10163941; 24.05.2002 DE 10223073
(43) Veröffentlichungstag der Anmeldung: 26.02.2003
(60) Teilanmeldung: 03023188.0
(73) Patentinhaber: Degussa AG, 40474 Düsseldorf (DE)
(72) Erfinder: Deschler, Ulrich, Dr., 63877 Sailauf (DE); Krafczyk, Roland, Dr., 79618 Rheinfelden (DE); Luginsland, Hans-Detlef, Dr., 50968 Köln (DE); Korth, Karsten, Dr., 79639 Wyhlen (DE); Kiefer, Ingo, 79650 Schopfheim (DE); Horn, Michael, Dr., 79618 Rheinfelden (DE)

(56) Entgegenhaltungen:
- EP-A- 0 085 831
- EP-A- 0 785 206
- EP-A- 0 787 773
- DE-A- 2 538 341
- DE-A- 3 426 987
- DATABASE CA [Online] CHEMICAL ABSTRACTS SERVICE, COLUMBUS, OHIO, US; HAKUTA, TAKASHI ET AL: "Curable silyl group-containing rubber compositions, their manufacture and uses in adhesives, coatings, sealants, etc." retrieved from STN Database accession no. 136:136086 CA XP002211616 & WO 2002 008333 A (MITSUI CHEMICALS, INC., JAPAN) 31. Januar 2002 (2002-01-31)

## Beschreibung

Die Erfindung betrifft Organosiliciumverbindungen, ein Verfahren zu ihrer Herstellung, sowie ihre Verwendung.

Es ist bekannt, Silane als Haftvermittler einzusetzen. So werden Aminoalkyltrialkoxysilane, wie zum Beispiel 3-Aminopropyltrimethoxysilan und 3-Aminopropyltriethoxysilan, Methacryloxyalkyltrialkoxysilane, wie zum Beispiel 3-Methacryloxypropyltrimethoxysilan, Polysulfanalkyltrialkoxysilane, wie zum Beispiel Bis[3-triethoxysilylpropyl]polysulfan und Bis[3-triethoxysilylpropyl]disulfan und Mercaptoalkyltrialkoxysilane, wie zum Beispiel 3-Mercaptopropyltrimethoxysilan und 3-Mercaptopropyltriethoxysilan als Haftvermittler zwischen anorganischen Materialen, beispielsweise Glasfasern, Metallen oder oxidischen Füllstoffen, und organischen Polymeren, beispielsweise Duroplasten, Thermoplasten und Elastomeren, beziehungsweise als Vernetzungsmittel und Oberflächenmodifizierungsmittel eingesetzt.

Diese Haftvermittler beziehungsweise Kupplungs- oder Verbindungsagenzien bilden sowohl zum Füllstoff als auch zum Elastomer Bindungen und bewirken somit zwischen der Füllstoffoberfläche und dem Elastomer eine gute Wechselwirkung. Sie erniedrigen die Mischungsviskosität und erleichtern die Dispersion des Füllstoffs.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole Methanol und Ethanol in erheblichen Mengen freigesetzt.

EP-A-787 773, Anspruch 8 beschreibt z.B. die Verbindungen HS(CH₂)₃Si(OMe)₃, HS (CH₂)₄Si(OMe)₃, HS(CH₂)₃Si(OEt)₃, HS(CH₂)₃SiMe(OEt)₂, und HSCH₂Si(OMe)₃

Es ist weiterhin bekannt, daß Methoxy- und Ethoxy-substituierte Silane reaktiver sind als die entsprechenden langkettigen Alkoxy-substituierten Silane und somit schneller an den Füllstoff anbinden können, so daß auf den Einsatz von Methoxy- und Ethoxy-substituierten Silanen aus wirtschaftlicher Sicht nicht verzichtet werden kann.

Ein Nachteil der bekannten Organosiliciumverbindungen ist die Freisetzung flüchtiger Alkohole, wie beispielsweise Methanol und Ethanol, an die Umwelt während und nach der Anbindung des Silans an den Füllstoff.

Aufgabe der Erfindung ist es, Organosiliciumverbindungen herzustellen, die geringere Mengen an flüchtigem Alkohol bei der Anbindung an den Füllstoff freisetzen und gleichzeitig eine hohe Reaktivität besitzen.

Gegenstand der Erfindung sind Organosiliciumverbindungen der allgemeinen Formel I und / oder II 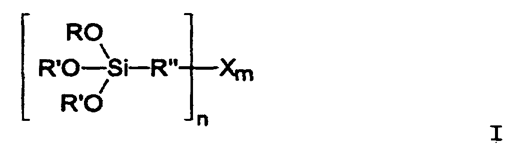 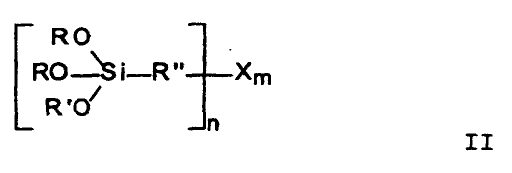 wobei
R eine Methyl- oder Ethyl-Gruppe ist,
R' gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe oder R'''₃Si, mit R''' gleich C₁-C₃₀ verzweigte oder unverzweigte Alkyl- oder Alkenyl-Gruppe, Aralkylgruppe oder Arylgruppe, ist,
R" eine verzweigte oder unverzweigte, gesättigte oder ungesättigte, aliphatische, aromatische oder gemischt aliphatische /aromatische zweibindige C₁-C₃₀ Kohlenwasserstoffgruppe ist,
X ist SH mit n=1 und m=1.

R" kann CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ oder 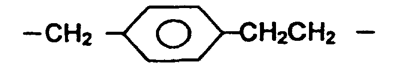 bedeuten.

Erfindungsgemäße Organosiliciumverbindungen der Formel I oder II können sein:

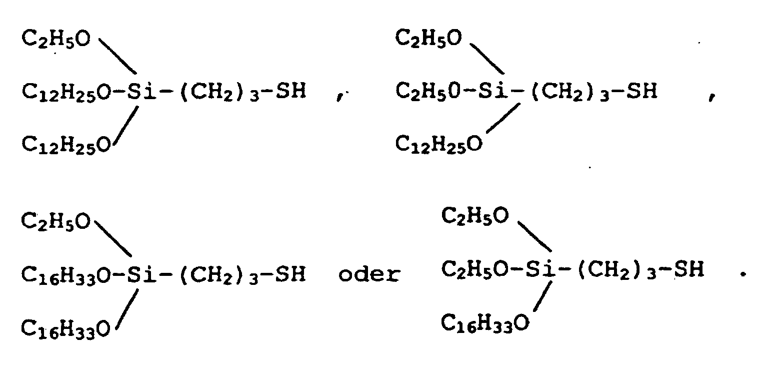

Ein weiterer Gegenstand der Erfindung ist ein Verfahren zur Herstellung der erfindungsgemäßen Organosiliciumverbindungen, welches dadurch gekennzeichnet ist, daß man Silane der allgemeinen Formel III 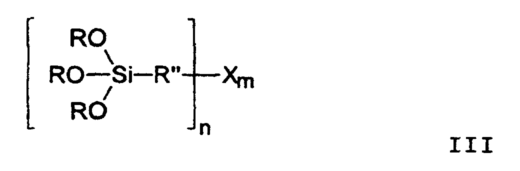 in der R, R", X, m und n die oben angegebene Bedeutung aufweisen, mit Alkoholen der allgemeinen Formel R'-OH, in der R' die oben angegebene Bedeutung aufweist, unter Abspaltung von R-OH, umsetzt und R-OH durch Destillation kontinuierlich vom Reaktionsgemisch abtrennt.

Bei dem erfindungsgemäßen Verfahren kann ein Gemisch entstehen, bei dem keine, eine, zwei oder drei der RO-Gruppen durch R'O-Gruppen ersetzt sind. Das Verhältnis der RO- zu R'O-Gruppen kann durch das molare Verhältnis des Silans der allgemeinen Formel III zu dem Alkohol der allgemeinen Formel R'-OH bestimmt werden. Beispielsweise kann bei n=1 durch Umsetzung von zwei Moläquivalenten des Alkohols der allgemeinen Formel R'-OH mit einem Moläquivalent des Silans der allgemeinen Formel III, eine Organosiliciumverbindung mit einer mittleren Zusammensetzung gemäß der Formel I hergestellt werden. Beispielsweise kann bei n=2 durch Umsetzung von vier Moläquivalenten des Alkohols der allgemeinen Formel R'-OH mit einem Moläquivalent des Silans der allgemeinen Formel III, eine Organosiliciumverbindung mit einer mittleren Zusammensetzung gemäß der Formel I hergestellt werden.

Das Gemisch kann als solches oder aufgetrennt in einzelne Verbindungen verwendet werden.

Für R' = R'''₃Si kann das Silan der allgemeinen Formel III mit R'''₃Si-OH oder mit R'''₃Si-O-SiR'''₃ umgesetzt werden. Die Verbindung R'''₃Si-O-SiR'''₃ kann zu R'''₃Si-OH hydrolisieren und mit dem Silan der allgemeinen Formel III reagieren.

Die Umsetzung kann man durch neutrale, saure oder basische Katalysatoren, wie zum Beispiel Salzsäure, Schwefelsäure, Phosphorsäure, Ameisensäure, Essigsäure, para-Toluolsulfonsäure, Natronlauge, Kalilauge, Natriummethylat, Natriumethylat, Deloxan ASP I/9, Ionenaustauscherharze Amberlyst 15 oder Metallverbindungen beschleunigen.

Metallverbindungen können auch Übergangsmetallverbindungen sein.

Als Metallverbindungen für die Katalysatoren können Metallchloride, Metalloxide, Metalloxychloride, Metallalkoholate, Metalloxyalkoholate, Metallamide, Metallimide oder Übergangsmetallverbindungen mit multiplen gebundenen Liganden verwendet werden.
Beispielsweise können als Metallverbindungen verwendet werden:
Halogenide, Amide oder Alkoholate der 3. Hauptgruppe (M³⁺= B,Al,Ga,In,Tl: M³⁺(OMe)₃, M³⁺(OEt)₃, M³⁺(OC₃H₇)₃, M³⁺(OC₄H₉)₃), Halogenide, Oxide, Imide, Alkoholate, Amide, Thiolate und Kombinationen der genannten Substituentenklassen mit multiple gebundenen Liganden an Verbindungen der Lanthaniden-Gruppe (Seltenen Erden, Ordnungszahl 58 bis 71 im Periodensystem der Elemente),
Halogenide, Oxide, Imide, Alkoholate, Amide, Thiolate und Kombinationen der genannten Substituentenklassen mit multiple gebundenen Liganden an Verbindungen der 3. Nebengruppe (M³⁺= Sc,Y,La: M³⁺(OMe)₃, M³⁺(OEt)₃, M³⁺(OC₃H₇)₃, M³⁺(OC₄H₉)₃, cpM³⁺(Cl)₂, cp cpM³⁺(OMe)₂, cpM³⁺(OEt)₂, cpM³⁺(NMe₂)₂ mit cp = Cyclopentadienyl),
Halogenide, Amide, Thiolate oder Alkoholate der 4. Hauptgruppe (M⁴⁺=Si Ge, Sn, Pb: M⁴⁺(OMe)₄, M⁴⁺(OEt)₄, M⁴⁺(OC₃H₇)₄, M⁴⁺(OC₄H₉)₄; M²⁺=Sn, Pb: M²⁺(OMe)₂, M²⁺(OEt)₂, M²⁺(OC₃H₇)₂, M²⁺(OC₄H₉)₂, Zinndilaurat, Zinndiacetat, Sn (OBu)₂),
Halogenide, Oxide, Imide, Alkoholate, Amide, Thiolate und Kombinationen der genannten Substituentenklassen mit multiple gebundenen Liganden an Verbindungen der 4. Nebengruppe (M⁴⁺=Ti,Zr,Hf: M⁴⁺(F)₄, M⁴⁺(Cl)₄, M⁴⁺(Br)₄, M⁴⁺(I)₄; M⁴⁺(OMe)₄, M⁴⁺(OEt)₄, M⁴⁺(OC₃H₇)₄, M⁴⁺(OC₄H₉)₄, cp₂Ti(Cl)₂, cp₂Zr(Cl)₂ , cp₂Hf(Cl)₂, cp₂Ti(OMe)₂, cp₂Zr(OMe)₂ ,cp₂Hf(OMe)₂, cpTi(Cl)₃, cpZr(Cl)₃,cpHf(Cl)₃; cpTi(OMe)₃, cpZr(OMe)₃ , cpHf(OMe)₃, M⁴⁺(NMe₂)₄, M⁴⁺(NEt₂)₄, M⁴⁺(NHC₄H₉)₄), Halogenide, Oxide, Imide, Alkoholate, Amide, Thiolate und Kombinationen der genannten Substituentenklassen mit multiple gebundenen Liganden an Verbindungen der 5. Nebengruppe (M⁵⁺, M⁴⁺ oder M³⁺=V, Nb, Ta: M⁵⁺(OMe)₅, M⁵⁺(OEt)₅, M⁵⁺(OC₃H₇)₅, M⁵⁺(OC₄H₉)₅, M³⁺O(OMe)₃, M³⁺O(OEt)₃, M³⁺O(OC₃H₇)₃, M³⁺O(OC₄H₉)₃, cpV(OMe)₄, cpNb(OMe)₃ , cpTa(OMe)₃; cpV(OMe)₂, cpNb(OMe)₃, cpTa(OMe)₃),
Halogenide, Oxide, Imide, Alkoholate, Amide, Thiolate und Kombinationen der genannten Substituentenklassen mit multiple gebundenen Liganden an Verbindungen der 6. Nebengruppe (M⁶⁺, M⁵⁺ oder M⁴⁺=Cr,Mo,W: M⁶⁺(OMe)₆, M⁶⁺(OEt)₆, M⁶⁺(OC₃H₇)₆, M⁶⁺(OC₄H₉)₆, M⁶⁺O(OMe)₄, M⁶⁺O(OEt)₄, M⁶⁺O (OC₃H₇)₄, M⁶⁺O(OC₄H₉)₄, M⁶⁺O₂(OMe)₂, M⁶⁺O₂(OEt)₂, M⁶⁺O₂(OC₃H₇)₂, M⁶⁺O₂(OC₄H₉)₂, M⁶⁺O₂(OSiMe₃)₂) oder
Halogenide, Oxide, Imide, Alkoholate, Amide, Thiolate und Kombinationen der genannten Substituentenklassen mit multiple gebundenen Liganden an Verbindungen der 7. Nebengruppe (M⁷⁺, M⁶⁺, M⁵⁺ oder M⁴⁺=Mn,Re: M⁷⁺O (OMe)₅, M⁷⁺O (OEt)₅, M⁷⁺O (OC₃H₇)₅, M⁷⁺O(OC₄H₉)₅, M⁷⁺O₂(OMe)₃, M⁷⁺O₂(OEt)₃, M⁷⁺O₂(OC₃H₇)₃, M⁷⁺O₂(OC₄H₉)₃, M⁷⁺O₂(OSiMe₃)₃, M⁷⁺O₃(OSiMe₃), M⁷⁺O₃(CH₃)).

Die Metallverbindungen können eine freie Koordinationsstelle am Metall besitzen.

Als Katalysatoren können auch Metallverbindungen verwendet werden, die durch Wasserzugabe zu hydrolisierbaren Metallverbindungen gebildet werden.

In einer besonderen Ausführungsform kann man Titanate, wie beispielsweise Tetra-n-butyl-orthotitanat oder Tetra-iso-propyl-orthotitanat, als Katalysatoren verwenden.

Die Metallverbindungen können wasserfrei sein, wodurch insgesamt weniger Wasser in die Reaktionsmischung eingetragen wird und weniger oligomere Silanverbindungen entstehen.

Die Reaktion kann man bei Temperaturen zwischen 20 und 200 °C durchführen. Zur Vermeidung von Kondensationsreaktionen kann es vorteilhaft sein, die Reaktion in einer wasserfreien, idealerweise in einer Inertgasatmosphäre, durchzuführen.

Die erfindungsgemäßen Organosiliciumverbindungen können als Haftvermittler zwischen anorganischen Materialen (zum Beispiel Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel verwendet werden. Die erfindungsgemäßen Organosiliciumverbindungen können als Haftvermittler in mit Kieselsäure und/oder Stärke gefüllten Reifen eingesetzt werden.

Ein weiterer Gegenstand der Erfindung sind Kautschukmischungen, welche dadurch gekennzeichnet sind, daß sie Kautschuk, Füllstoff, wie beispielsweise gefällte Kieselsäure, gegebenenfalls weitere Kautschukhilfsmittel, sowie mindestens eine erfindungsgemäße Organosiliciumverbindung enthalten.

Die erfindungsgemäße Organosiliciumverbindung kann in Mengen von 0,1 bis 20 Gew-%, bezogen auf die Menge des eingesetzten Kautschuks, eingesetzt werden.

Die Zugabe der erfindungsgemäßen Organosiliciumverbindungen, sowie die Zugabe der Füllstoffe kann bevorzugt bei Massetemperaturen von 100 bis 200 °C erfolgen. Sie kann jedoch auch später bei tieferen Temperaturen (40 bis 100 °C) zum Beispiel zusammen mit weiteren Kautschukhilfsmitteln erfolgen.

Die Organosiliciumverbindung kann sowohl in reiner Form als auch aufgezogen auf einen inerten organischen oder anorganischen Träger dem Mischprozeß zugegeben werden. Bevorzugte Trägermaterialien sind Kieselsäuren, Wachse, Thermoplaste, natürliche oder synthetische Silicate, Aluminiumoxid oder Ruße.

Als Füllstoffe können für die erfindungsgemäßen Kautschukmischungen die folgenden Füllstoffe eingesetzt werden:
- Ruße: Die hierbei zu verwendenden Ruße sind nach dem Flammruß-, Furnace- oder Gasruß-Verfahren hergestellt und besitzen BET-Oberflächen von 20 bis 200 m²/g, wie z.B.SAF-,ISAF-, HSAF-, HAF-, FEF- oder GPF-Ruße. Die Ruße können gegebenenfalls auch Heteroatome wie zum Beispiel Si enthalten.
- hochdisperse Kieselsäuren, hergestellt zum Beispiel durch Fällung von Lösungen von Silicaten oder Flammenhydrolyse von Siliciumhalogeniden mit spezifischen Oberflächen von 5 bis 1000, vorzugsweise 20 bis 400 m²/g (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden vorliegen.
- Synthetische Silicate, wie Aluminiumsilicat, Erdalkalisilicate wie Magnesiumsilicat oder - Calciumsilicat, mit BET-Oberflächen von 20 bis 400 m²/g und Primärteilchendurchmessern von 10 bis 400 nm.
- Synthetische oder natürliche Aluminium-oxide und - hydroxide
- Natürliche Silicate, wie Kaolin und andere natürlich vorkommende Kieselsäuren.
- Glasfaser und Glasfaserprodukte (Matten, Stränge) oder Mikroglaskugeln.

Bevorzugt können hochdisperse Kieselsäuren, hergestellt durch Fällung von Lösungen von Silicaten, mit BET-Oberflächen von 20 bis 400 m²/g in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 0,3 bis 10 Gew.-Teile einer Verbindung der erfindungsgemäßen oligomeren Organosilane, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen u. a.
- Polybutadien (BR)
- Polyisopren (IR)
- Styrol/Butadien-Copolymerisate mit Styrolgehalten von 1 bis 60, vorzugsweise 2 bis 50 Gew.-% (SBR)
- Isobutylen/Isopren-Copolymerisate (IIR)
- Butadien/Acrylnitril-Copolymere mit Acrylnitrilgehalten von 5 bis 60, vorzugsweise 10 bis 50 Gew.-% (NBR)
- teilhydrierter oder vollständig hydrierter NBR-Kautschuk (HNBR)
- Ethylen/Propylen/Dien-Copolymerisate (EPDM)

sowie Mischungen dieser Kautschuke. Für die Herstellung von Kfz-Reifen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen sind z.B. Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel werden in Mengen von 0,1 bis 10 Gew.-%, bevorzugt 0.1 bis 5 Gew.-%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der erfindungsgemäßen Organosiliciumverbindung kann in bekannten Mischaggregaten, wie Walzen, Innenmischern und Mischextrudern, durchgeführt werden.

Die erfindungsgemäßen Kautschukmischungen eignen sich zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

Die erfindungsgemäßen Organosiliciumverbindungen haben den Vorteil, daß weniger Methanol beziehungsweise Ethanol freigesetzt wird als bei den bekannten Silanen, bei gleichbleibender Reaktivität. Die nichtflüchtigen Alkohole werden aufgrund ihrer Inaktivität nicht vom Silan abgetrennt oder verbleiben aufgrund ihrer Nichtflüchtigkeit in der Polymermatrix. Sie gelangen in beiden Fällen nicht in die Umwelt.

### Beispiel 1:

Im 1-Liter-Vierhalskolben mit Destillationsaufsatz werden bei Raumtemperatur 200,0 g Bis(3-triethoxysilylpropyl)polysulfan (Formel III mit R = Ethyl, R" = CH₂CH₂CH₂, X = S, n = 2 und m = 3,8) und 70,0 g 1-Dodecanol (R' = C₁₂H₂₅) vorgelegt und mit 1,0 g Amberlyst 15 versetzt. Die gelbliche Lösung wird auf 100-130 °C erhitzt, das entstehende Ethanol abdestilliert und 210 g 1-Dodecanol innerhalb von 1,5 h zugetropft. Das entstehende Ethanol wird kontinuierlich abdestilliert. Gegen Ende der Reaktion wird kurzfristig auf 150 °C erhitzt. Anschließend wird am Rotationsverdampfer im Vakuum bei 80 °C und 50 mbar abdestilliert. Man erhält 408,5 g (99,4%) einer gelben Flüssigkeit Formel I mit R = Ethyl, R' = C₁₂H₂₅, R'' = CH₂CH₂CH₂, X = S, n = 2 und m = 3,8.

### Beispiel 2:

Im 1-Liter-Vierhalskolben mit Destillationsaufsatz werden bei Raumtemperatur 200,0 g Bis(3-triethoxysilylpropyl)polysulfan (Formel III mit R = Ethyl, R" = CH₂CH₂CH₂, X = S, n = 2 und m = 3,8) und 70,0 g 1-Dodecanol (R' = C₁₂H₂₅) vorgelegt und mit 0,7 g p-Toluolsulfonsäuremonohydrat versetzt. Die gelbliche Lösung wird auf 100-105 °C erhitzt, entstehendes Ethanol abdestilliert und 210 g 1-Dodecanol innerhalb von 1,5 h zugetropft. Das entstehende Ethanol wird kontinuierlich abdestilliert. Gegen Ende der Reaktion wird kurzfristig auf 130 °C erhitzt. Anschließend wird am Rotationsverdampfer im Vakuum bei 80 °C und 50 mbar abdestilliert. Man erhält 389,1 g (94,7%) einer gelben Flüssigkeit der Formel I mit R = Ethyl, R' = C₁₂H₂₅, R" = CH₂CH₂CH₂, X = S, n = 2 und m = 3,8.

### Beispiel 3:

Im 1-Liter-Vierhalskolben mit Destillationsaufsatz werden bei Raumtemperatur 200,0 g Bis(3-triethoxysilylpropyl)polysulfan (Formel III mit R = Ethyl, R" = CH₂CH₂CH₂, X = S, n = 2 und m = 3,8) und 60,6 g Diethylenglycolmonobutylether (R' = (CH₂)₂-O-(CH₂)₂-O-C₄H₉) vorgelegt und mit 1,0 g Amberlyst 15 versetzt. Die gelbliche Lösung wird auf 115-130 °C erhitzt, entstehendes Ethanol abdestilliert und 183,2 g Diethylenglycolmonobutylether innerhalb von 1,5 h zugetropft. Das entstehende Ethanol wird kontinuierlich abdestilliert. Anschließend wird am Rotationsverdampfer im Vakuum bei 80 °C und 25 mbar abdestilliert. Man erhält 367,2 g (98,2%) einer gelben Flüssigkeit der Formel I mit R = Ethyl, R' = (CH₂)₂-O-(CH₂)₂-O-C₄H₉, R" = CH₂CH₂CH₂, X = S, n = 2 und m = 3,8.

### Beispiel 4:

Im 1-Liter-Vierhalskolben mit Destillationsaufsatz werden bei Raumtemperatur 200,0 g Bis(3-triethoxysilylpropyl)polysulfan (Formel III mit R = Ethyl, R" = CH₂CH₂CH₂, X = S, n = 2 und m = 3,8) und 60,9 g Diethylenglycolmonobutylether (R' = (CH₂)₂-O-(CH₂)₂-O-C₄H₉) vorgelegt und mit 0,7 g p-Toluolsulfonsäuremonohydrat versetzt. Die gelbliche Lösung wird auf 120-130 °C erhitzt, entstehendes Ethanol abdestilliert und 182,8 g Diethylenglycolmonobutylether innerhalb von 1,5 h zugetropft. Das entstehende Ethanol wird kontinuierlich abdestilliert. Anschließend wird am Rotationsverdampfer im Vakuum bei 80 °C und 20 mbar abdestilliert. Man erhält 358,5 g (95,1%) einer gelben Flüssigkeit der Formel I mit R = Ethyl, R' = (CH₂)₂-O-(CH₂)₂-O-C₄H₉, R" = CH₂CH₂CH₂, X = S, n = 2 und m = 3,8.

### Beispiel 5:

Im 1-Liter-Vierhalskolben mit Destillationsaufsatz werden bei Raumtemperatur 200,0 g Bis(3-triethoxysilylpropyl)polysulfan (Formel III mit R = Ethyl, R'' = CH₂CH₂CH₂, X = S, n = 2 und m = 3,8) und 80,5 g 1-Tetradecanol (R' = -C₁₄H₂₉) vorgelegt und mit 0,7 g p-Toluolsulfonsäuremonohydrat versetzt. Die gelbliche Lösung wird auf 120-130 °C erhitzt, entstehendes Ethanol abdestilliert und 241,7 g Tetradecanol innerhalb von 2 h zugegeben. Das entstehende Ethanol wird kontinuierlich abdestilliert. Anschließend wird am Rotationsverdampfer im Vakuum bei 80 °C und 20 mbar abdestilliert. Man erhält 432,1 g (95,4%) einer gelben Flüssigkeit der Formel I mit R = Ethyl, R' = -C₁₄H₂₉, R'' = CH₂CH₂CH₂, X = S, n = 2 und m = 3,8.

### Beispiel 6:

Im 1-Liter-Vierhalskolben mit Destillationsaufsatz werden bei Raumtemperatur 200,0 g Bis(3-triethoxysilylpropyl)polysulfan (Formel III mit R = Ethyl, R'' = CH₂CH₂CH₂, X = S, n = 2 und m = 3,8) und 80,5 g 1-Tetradecanol (R' = -C₁₄H₂₉) vorgelegt und mit 1,0 g Deloxan ASP I/9 der Fa. Degussa versetzt. Die gelbliche Lösung wird auf 120-130 °C erhitzt, entstehendes Ethanol abdestilliert und 241,7 g Tetradecanol innerhalb von 2 h zugegeben. Das entstehende Ethanol wird kontinuierlich abdestilliert. Anschließend wird am Rotationsverdampfer im Vakuum bei 80 °C und 20 mbar abdestilliert. Man erhält 448,3 g (99,0%) einer gelben Flüssigkeit der Formel I mit R = Ethyl, R' = -C₁₄H₂₉, R'' = CH₂CH₂CH₂, X = S, n = 2 und m = 3,8.

### Beispiel 7:

Im 1-Liter-Vierhalskolben mit Destillationsaufsatz werden bei Raumtemperatur 200,0 g Bis(3-triethoxysilylpropyl)polysulfan (Formel III mit R = Ethyl, R'' = CH₂CH₂CH₂, X = S, n = 2 und m = 3,8) und 50,4 g Diethylenglycolmonoethylether (R' = (CH₂)₂-O-(CH₂)₂-O-C₂H₅) vorgelegt und mit 0,7 g p-Toluolsulfonsäure-monohydrat versetzt. Die gelbliche Lösung wird auf 125-130 °C erhitzt, entstehendes Ethanol abdestilliert und 151,2 g Diethylenglycolmonoethylether innerhalb von 1,5 h zugetropft. Das entstehende Ethanol wird kontinuierlich abdestilliert. Anschließend wird am Rotationsverdampfer im Vakuum bei 80 °C und 25 mbar abdestilliert. Man erhält 321,0 g (96,6%) einer gelben Flüssigkeit der Formel I mit R = Ethyl, R' = (CH₂)₂-O-(CH₂)₂-O-C₂H₅, R'' = CH₂CH₂CH₂, X = S, n = 2 und m = 3,8.

### Beispiel 8:

Im 1-Liter-Vierhalskolben mit Destillationsaufsatz werden bei Raumtemperatur 200,0 g Bis(3-triethoxysilylpropyl)polysulfan (Formel III mit R = Ethyl, R'' = CH₂CH₂CH₂, X = S, n = 2 und m = 3,8) und 50,4 g Diethylenglycolmonoethylether (R' = (CH₂)₂-O-(CH₂)₂-O-C₂H₅) vorgelegt und mit 1,0 g Amberlyst 15 versetzt. Die gelbliche Lösung wird auf 125 °C erhitzt, entstehendes Ethanol abdestilliert und 151,2 g Diethylenglycolmonoethylether innerhalb von 1,5 h zugetropft. Das entstehende Ethanol wird kontinuierlich abdestilliert. Anschließend wird am Rotationsverdampfer im Vakuum bei 80 °C und 25 mbar abdestilliert. Man erhält 321,9 g (96,9%) einer gelben Flüssigkeit der Formel I mit R = Ethyl, R' = (CH₂)₂-O-(CH₂)₂-O-C₂H₅, R'' = CH₂CH₂CH₂, X = S, n = 2 und m = 3,8.

### Beispiel 9:

Im 1-Liter-Vierhalskolben mit Destillationsaufsatz werden bei Raumtemperatur 200,0 g Bis(3-triethoxysilylpropyl)polysulfan (Formel III mit R = Ethyl, R'' = CH₂CH₂CH₂, X = S, n = 2 und m = 3,8) und 71,8 g Diethylenglycolmonohexylether (R' = (CH₂)₂-O-(CH₂)₂-O-C₆H₁₃) vorgelegt und mit 0,7 g p-Toluolsulfonsäure-monohydrat versetzt. Die gelbliche Lösung wird auf 125 °C erhitzt, entstehendes Ethanol abdestilliert und 214,2 g Diethylenglycolmonohexylether innerhalb von 1,5 h zugegeben. Das entstehende Ethanol wird kontinuierlich abdestilliert. Anschließend wird am Rotationsverdampfer im Vakuum bei 80 °C und 25 mbar abdestilliert. Man erhält 414,4 g (99,4%) einer gelben Flüssigkeit der Formel I mit R = Ethyl, R' = (CH₂)₂-O-(CH₂)₂-O-C₆H₁₃, R'' = CH₂CH₂CH₂, X = S, n = 2 und m = 3,8.

### Beispiel 10:

Im 1-Liter-Vierhalskolben mit Destillationsaufsatz werden bei Raumtemperatur 125,2 g 3-Mercaptopropyltriethoxysilan (Formel III mit R = -CH₂CH₃, R'' = -CH₂CH₂CH₂-, X = -SH, n = 1, m = 1) und 22,5 g 1-Tetradecanol (R' = -C₁₄H₂₉) vorgelegt und mit 1,0 g p-Toluolsulfonsäuremonohydrat versetzt. Die Lösung wird auf 120 °C erhitzt und sobald entstehendes Ethanol abdestilliert, werden 202,6 g Tetradecanol innerhalb von 1,5 h zugegeben. Das entstehende Ethanol wird kontinuierlich abdestilliert. Anschließend wird am Rotationsverdampfer im Vakuum bei 80 °C und 20 mbar abdestilliert. Man erhält 298,8 g (98,9%) einer farblosen Flüssigkeit vom Typ I mit R = -CH₂CH₃, R' = -C₁₄H₂₉, R'' = -CH₂CH₂CH₂-, X = -SH, n = 1, m = 1.

### Beispiel 11:

### Gummitechnische Untersuchungen der Organosiliciumverbindungen

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Das allgemeine Verfahren zur Herstellung von Kautschukmischungen und deren Vulkanisate ist in dem Buch: "Rubber Technology Handbook", W. Hofmann, Hanser Verlag 1994 beschrieben.

**Tabelle 1**

| | Mischung 1 Referen z | Mischung 2 | Mischung 3 | Mischung 4 | Mischung 5 | Mischung 6 | Mischung 7 | Mischung 8 | Mischung 9 |
|---|---|---|---|---|---|---|---|---|---|
| 1.Stufe | | | | | | | | | |
| Buna VSL 5025-1 | 96 | 96 | 96 | 96 | 96 | 96 | 96 | 96 | 96 |
| Buna CB 24 | 30 | 30 | 30 | 30 | 30 | 30 | 30 | 30 | 30 |
| Ultrasil 7000 GR | 80 | 80 | 80 | 80 | 80 | 80 | 80 | 80 | 80 |
| Si69 | 6,4 | - | - | - | - | - | - | - | - |
| Beispiel 1 | - | 13,01 | - | - | - | - | - | - | - |
| Beispiel 2 | - | - | 13,35 | - | - | - | - | - | - |
| Beispiel 3 | - | - | - - | | - | - | - - | | - |
| Beispiel 4 | - | - | - | 11,82 | - | - | - | - | - |
| Beispiel 5 | - | - | - | - | 14,5 | - | - | - | - |
| Beispiel 6 | - | - | - | - | - | 13,61 | - | - | - |
| Beispiel 7 | - | - | - | - | - | - | 10,30 | - | - |
| Beispiel 8 | - | - | - | - | - | - | - | 10,30 | - |
| Beispiel 9 | - | - | - | - | - | - | - | - | 13,27 |
| ZnO | 3 | 3 | 3 | 3 | 3 | 3 | 3 | 3 | 3 |
| Stearinsäure | 2 | 2 | 2 | 2 | 2 | 2 | 2 | 2 | 2 |
| Naftolen | 10 | 10 | 10 | 10 | 10 | 10 | 10 | 10 | 10 |
| Vulkanox 4020 | 1,5 | 1,5 | 1,5 | 1,5 | 1,5 | 1,5 | 1,5 | 1,5 | 1,5 |
| Protektor G35P | 1 | 1 | 1 | 1 | 1 | 1 | 1 | 1 | 1 |
| 2.Stufe | | | | | | | | | |
| Batch Stufe 1 | | | | | | | | | |
| 3.Stufe | | | | | | | | | |
| Batch Stufe 2 | | | | | | | | | |
| Vulkacit D | 2 | 2 | 2 | 2 | 2 | 2 | 2 | 2 | 2 |
| Vulkazit CZ | 1,5 | 1,5 | 1,5 | 1,5 | 1,5 | 1,5 | 1,5 | 1,5 | 1,5 |
| Schwefel | 1,5 | 1,5 | 1,5 | 1,5 | 1,5 | 1,5 | 1,5 | 1,5 | 1,5 |

Bei dem Polymer VSL 5025-1 handelt es sich um ein in Lösung polymerisiertes SBR-Copolymer der Bayer AG mit einem Styrolgehalt von 25 Gew.-% und einem Butadiengehalt von 75 Gew.-%. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit cis 1,4-Gehalt von mindestens 97 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G35P ist ein Ozonschutzwachs der HB-Fuller GmbH. Vulkacit D (DPG) und Vulkazit CZ (CBS) sind Handelsprodukte der Bayer AG.

Ultrasil 7000 GR ist eine gut dispergierbare gefällte Kieselsäure der Degussa AG mit einer BET Oberfläche von 170 m²/g. Si 69, Bis(3-triethoxysilylpropyl)tetrasulfan, ist ein Handelsprodukt der Degussa AG.

Die Kautschukmischungen werden in einem Innenmischer entsprechend der Mischvorschrift in Tabelle 2 hergestellt.

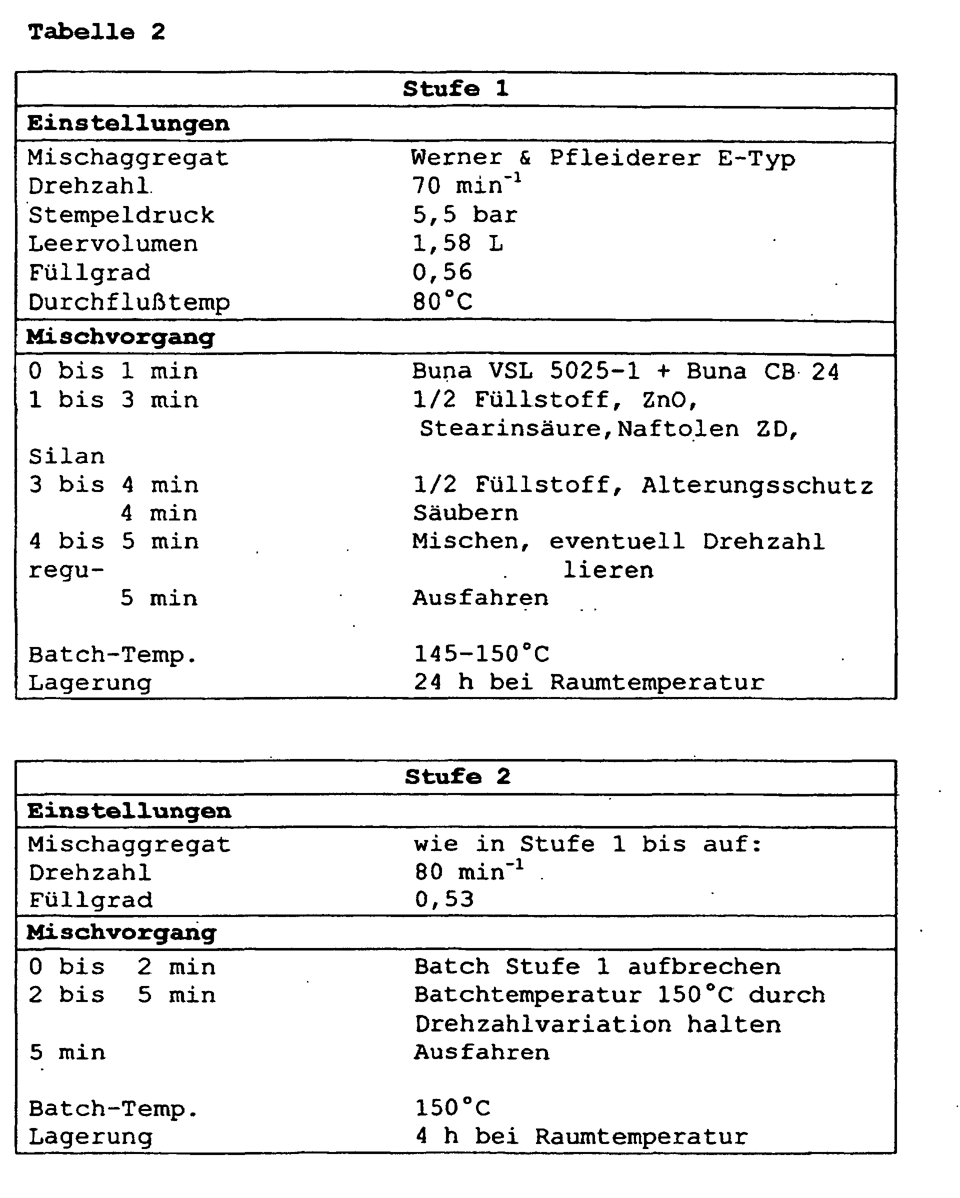

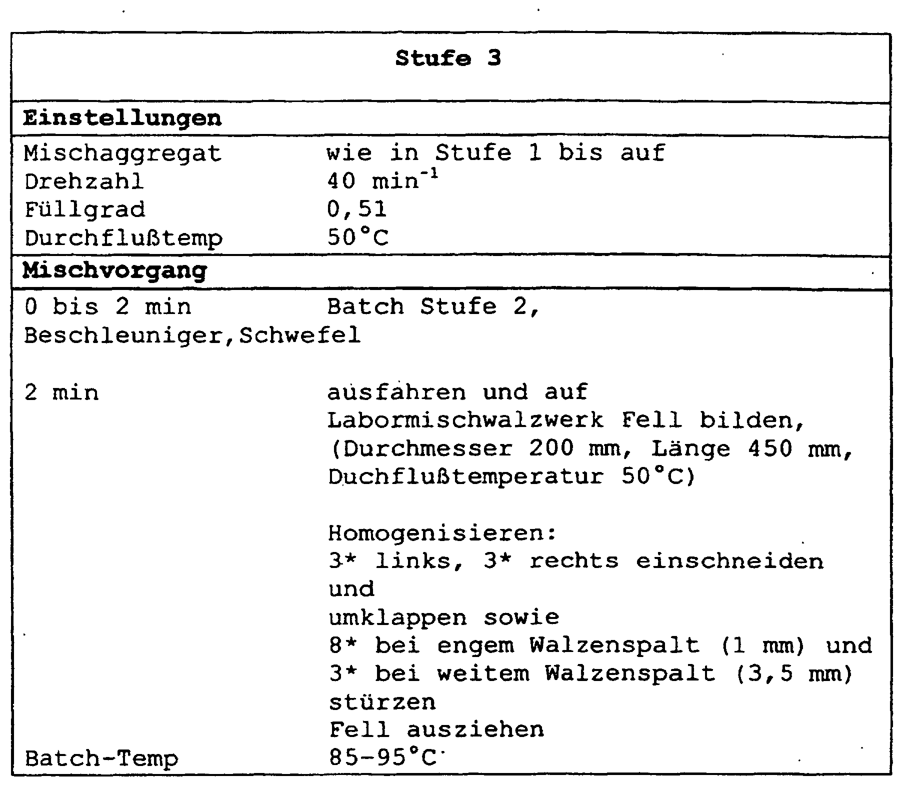

In Tabelle 3 sind die Methoden für die Gummitestung zusammengestellt.

**Tabelle 3**

| Physikalische Testung | Norm/Bedingungen |
|---|---|
| ML 1+4, 100°C, 3. Stufe | DIN 53523/3, ISO 667 |
| Vulkameterprüfung, 165°C 6502 | DIN 53529/3, ISO |
| Dmax-Dmin (dNm) t10% und t90% (min) | |
| Zugversuch am Ring, 23°C | DIN 53504, ISO 37 |
| Zugfestigkeit (MPa) | |
| Spannungswerte (MPa) | |
| Bruchdehnung (%) | |
| Shore-A-Härte, 23°C (SH) | DIN 53 505 |
| Viskoelastische Eigenschaften, 0 bis 60°C, 16 Hz, 50 N Vorkraft und 25 N Amplitudenkraft | DIN 53 513, ISO 2856 |
| Komplexer Modul E* (MPa) | |
| Verlustfaktor tan δ **()** | |
| Ball Rebound, 23°C (%) | ASTM D 5308 |
| Goodrich Flexometer 0,25inch Hub, 25 Min., 23°C 623 A | DIN 53 533, ASTM D |
| DIN-Abrieb, 10 N Kraft (mm³) | DIN 53 516 |
| Dispersion ( ) | ISO/DIS 11345 |

Tabelle 4 a und Tabelle 4 b zeigen die Ergebnisse der gummitechnischen Prüfung. Die Mischungen werden 20 min bei 165°C vulkanisiert.

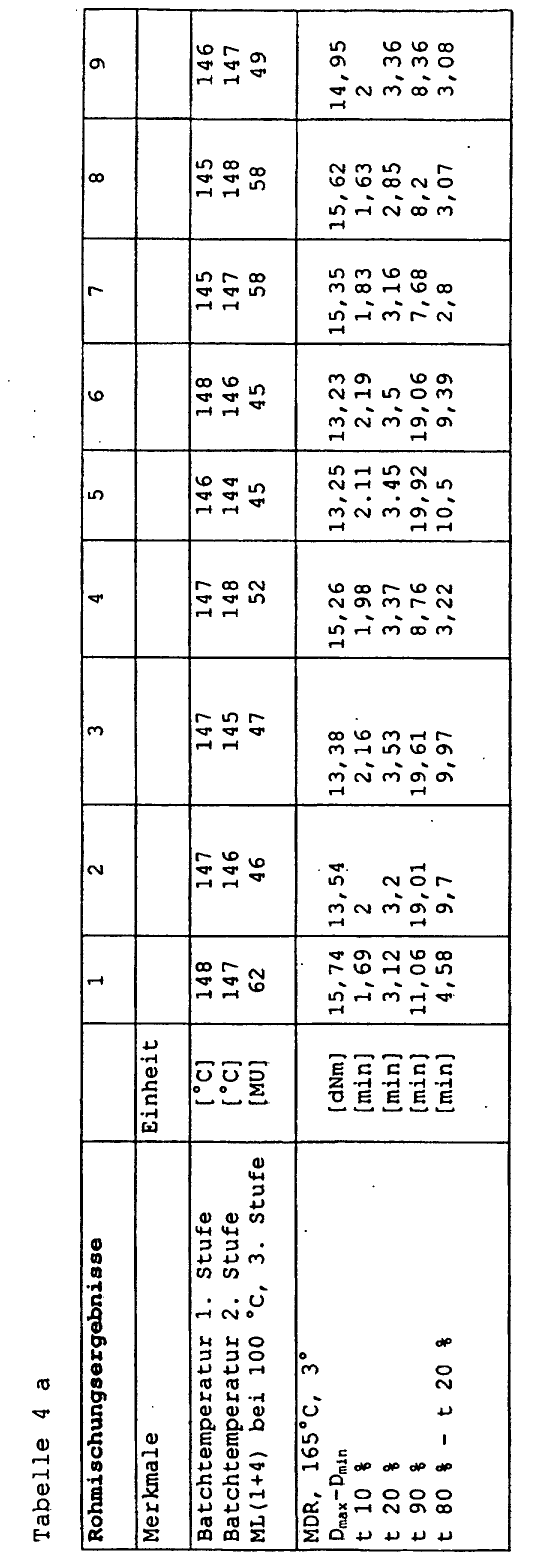

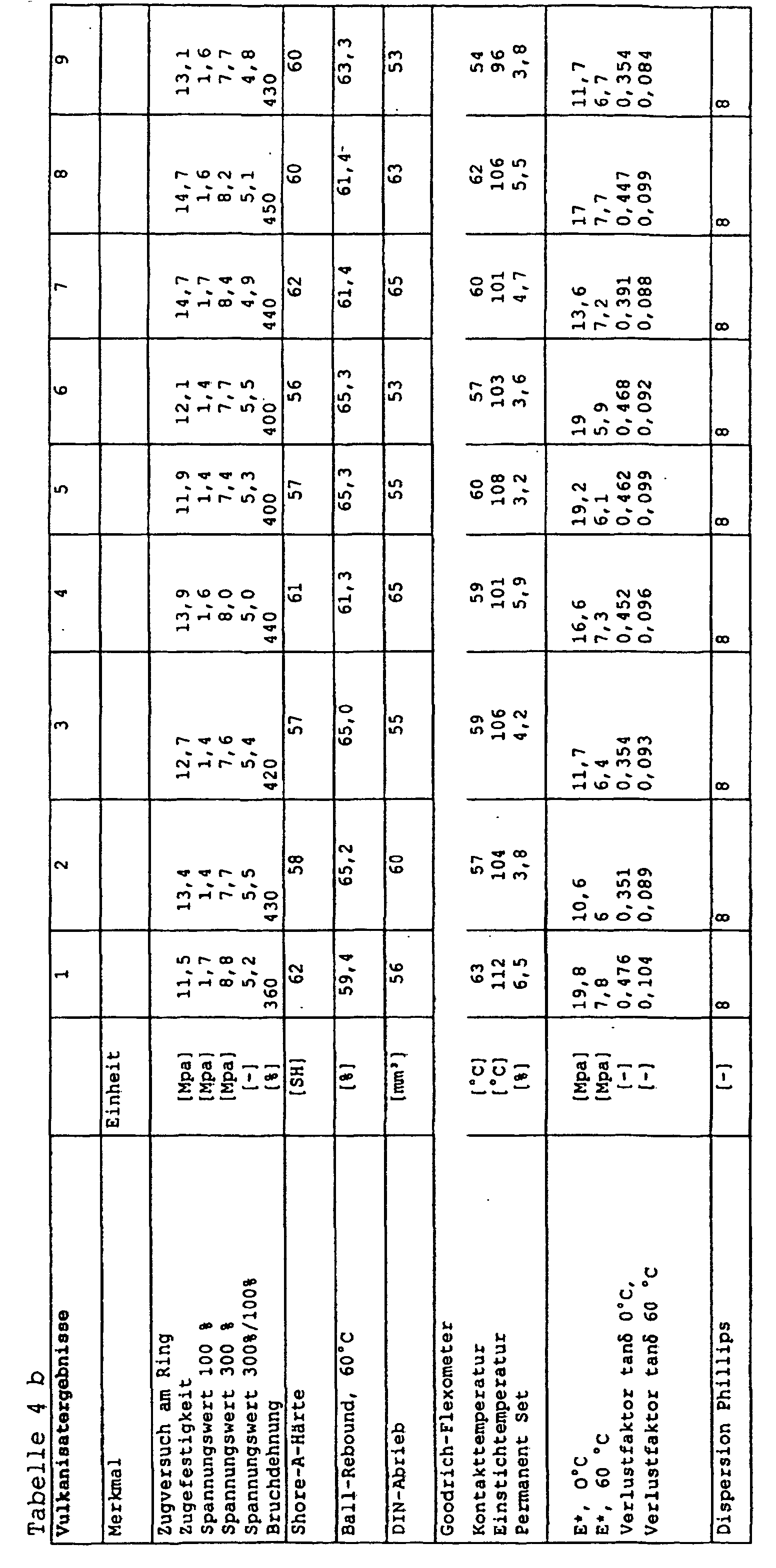

Wie man anhand der Daten in den Tabellen 4 a und 4 b erkennen kann, liegt die Mooney-Viskosiät der Mischungen mit den erfindungsgemäßen Organosiliciumverbindung unter der Referenzmischung 1.

Die Mischungen mit den erfindungsgemäßen Organosiliciumverbindungen (Ethern) zeigen eine schnellere Vulkanisation. Der Verstärkungsfaktor liegt für alle Mischungen auf hohem Nieveau, die Zugfestikeiten und Bruchdehnungen sind ebenfalls vergleichbar zur Si 69 Referenz. Der DIN-Abrieb ist für alle Mischungen gut. Die statischen Gummidaten zeigen die erfolgte Kieselsäure-Silan-Kautschukanbindung an.

Man erkennt beim Goodrich-Flexometertest, dass die Mischungen mit den langkettigen Alkoholen zu einem niedrigeren Wärmeaufbau und verbessertem Permanent-Set führen. Bei der MTS Prüfung fallen niedrigere dynamische Steifigkeiten und ein reduzierter tan δ 60°C (niedriger Rollwiderstand) auf.

### Beispiel 12:

Im 1-Liter-Vierhalskolben mit Destillationsaufsatz werden bei Raumtemperatur 180,0 g Bis(3-triethoxysilylpropyl)disulfan (Formel III mit R = Ethyl, R'' = CH₂CH₂CH₂, X = S, n = 2 und m = 2,2) und 80,5 g 1-Tetradecanol (R' = -C₁₄H₂₉) vorgelegt und mit 0,7 g p-Toluolsulfonsäuremonohydrat versetzt. Die gelbliche Lösung wird auf 120-130 °C erhitzt, das entstehende Ethanol abdestilliert und 237,5 g Tetradecanol innerhalb von 2 h zugegeben. Das entstehende Ethanol wird kontinuierlich abdestilliert. Anschließend wird am Rotationsverdampfer im Vakuum bei 80 °C und 20 mbar abdestilliert. Man erhält 418,5 g (98,0%) einer gelben Flüssigkeit der Formel I mit R = Ethyl, R' = -C₁₄H₂₉, R'' = CH₂CH₂CH₂, X = S, n = 2 und m = 2,2.

### Beispiel 13:

Am Rotationsverdampfer wird im 1-Liter-Kolben ein Gemisch aus 125,2 g 3-Mercaptopropyltriethoxysilan (Formel III mit R = -CH₂CH₃, R'' = -CH₂CH₂CH₂-, X = -SH, n = 1, m = 1), 225,1 g 1-Tetradecanol (R' = -C₁₄H₂₉) und 1,0 g p-Toluolsulfonsäuremonohydrat auf 110 °C erhitzt und entstehendes Ethanol innerhalb von 4 h im Vakuum bei 40 mbar abdestilliert. Man erhält 298,5 g (98,8%) einer farblosen Flüssigkeit der Formel I mit R = -CH₂CH₃, R' = -C₁₄H₂₉, R'' = -CH₂CH₂CH₂-, X = -SH, n = 1, m = 1.

### Beispiel 14:

Am Rotationsverdampfer wird im 1-Liter-Kolben ein Gemisch aus 200,0 g Bis (3-triethoxysilylpropyl)polysulfan (Formel III mit R = Ethyl, R'' = CH₂CH₂CH₂, X = S, n = 2 und m = 3,8), 322,2 g 1-Tetradecanol (R' = -C₁₄H₂₉) und 1,0 g p-Toluolsulfonsäuremonohydrat auf 110 °C erhitzt und entstehendes Ethanol innerhalb von 4 h im Vakuum bei 40 mbar abdestilliert. Man erhält 448,1 g (99,0%) einer gelben Flüssigkeit der Formel I mit R = Ethyl, R' = -C₁₄H₂₉, R'' = CH₂CH₂CH₂, X = S, n = 2 und m = 3,8.

### Beispiel 15:

Am Rotationsverdampfer werden im 1-Liter-Kolben ein Gemisch bestehend aus 150 g Si 69 (Verbindung III mit R = -CH₂CH₃, R² = -CH₂CH₂CH₂-, X = S, n=2, m=1 bis 10 und einem mittlerem m von 3,8), und eine vierfach molare Menge an Tetradecanol mit den angegebenen Katalysatormengen bei den angegebenen Temperaturen erhitzt und entstehendes Ethanol im Vakuum bei 40 mbar innerhalb von 120 min abdestilliert (Tabelle 5). Man erhält nach Abkühlen eine gelbe bis gelb-orange , höherviskose Flüssigkeit der Formel I mit R = -CH₂CH₃, R² = -CH₂CH₂CH₂-, X = S mit n=2 und m=1 bis 10.

Si 69 ist Bis-(3-triethoxysilylpropyl)polysulfan mit einer mittleren Sulfankettenlänge von 3,8 der Firma Degussa AG.

Ti(OC₂H₅)₄, Ti(OC₃H₇)₄ und Ti(OC₄H₉)₄ werden von der Firma Aldrich hergestellt. P-Toluolsulfonsäure und p-Toluolsulfonsäure-Natriumsalz werden von der Firma Merck-Schuchardt hergestellt.

### Beispiel 16:

In einem 500 ml 3-Halskolben wird ein Gemisch bestehend aus 100 g Si 69 (Verbindung III mit R = -CH₂CH₃, R² = -CH₂CH₂CH₂-, X = S, n=2, m=1 bis 10 und einem mittlerem m von 3,8), und eine vierfach molare Menge des entsprechenden Alkohols mit den angegebenen Katalysatormengen bei 130°C erhitzt und entstehendes Ethanol innerhalb von 120 min abdestilliert (Tabelle 6). Man erhält nach Abkühlen eine gelbe bis gelb-orange, höherviskose Flüssigkeit der Formel I mit R = -CH₂CH₃, R² = -CH₂CH₂CH₂-, X = S mit n=2 und m=1 bis 10.

Die entsprechenden NMR-analytischen Ergebnisse sind in den Tabellen 5 und 6 aufgeführt.

Die Ergebnisse der kernresonanzspektroskopischen Untersuchungen werden an einem DRX 500 NMR-Gerät der Firma Bruker gemäß den dem Fachmann bekannten Regeln und Bedienvorschriften erhalten. Die verwendeten Messfrequenzen sind 99,35 MHz für ²⁹Si-Kerne und 500 MHz für ¹H-Kerne.

Als Referenz dient jeweils Tetramethylsilan (TMS).

Der Umsatz wird als der Quotient aus dem ¹H-NMR Integral (Si-O-CₓH_{y}) dividiert durch die Summe aus dem ¹H-NMR Integral (Si-O-Et) und ¹H-NMR Integral (Si-O-CₓH_{y}) x 0,66 definiert. Der Umsatz wird in % von 1 angegeben. 100 % Umsatz bedeuten, daß 4 von 6 Äquivalenten EtO ausgetauscht sind und 2 Äquivalente EtO am Silizium verbleiben.

Die Menge an Oligomeren wird bestimmt mittels ²⁹Si-NMR durch Vergleich der Integrale der Si(OEt)₃ und der Si(OEt)₂ -O-Si(OEt)₂ Signale.

Der Umsatz der Umesterung des erfindungsgemäßen Verfahrens mit Metallverbindungen ist bei niedrigeren Temperaturen höher als bei den anderen Katalysatoren, bei vergleichbarer oder sogar geringerer molarer Katalysatorkonzentration. Zusätzlich ist die Menge an gebildeten Oligomeren geringer. Wird als wasserfreies Äquivalent für p-Toluolsulfonsäuremonohydrat das p-Toluolsulfonsäure-Natriumsalz verwendet, ist auch bei hohen Katalysatormengen ein schlechterer Umsatz als bei der Verwendung von Titanalkoholaten festzustellen (Tabelle 6).

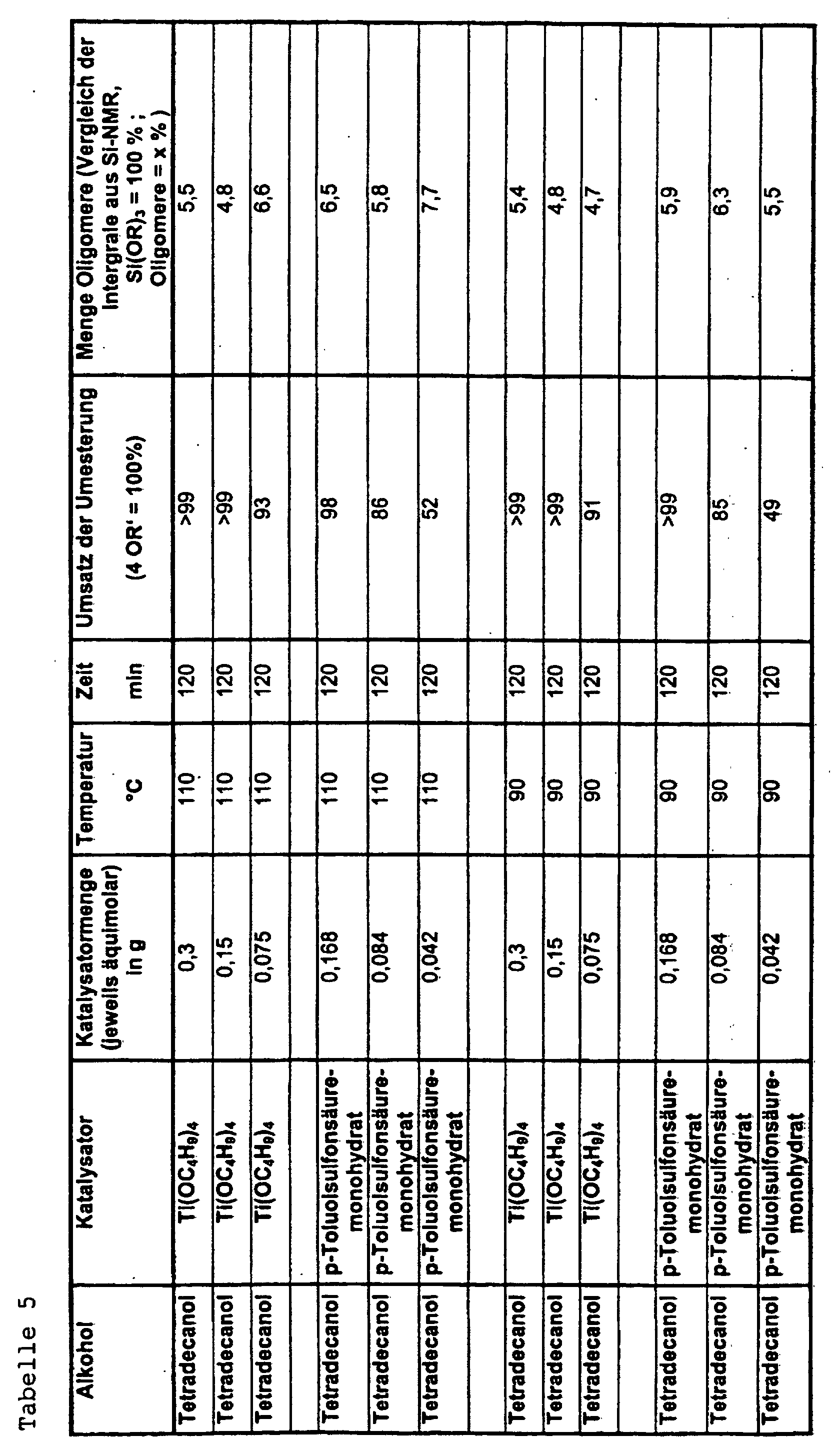

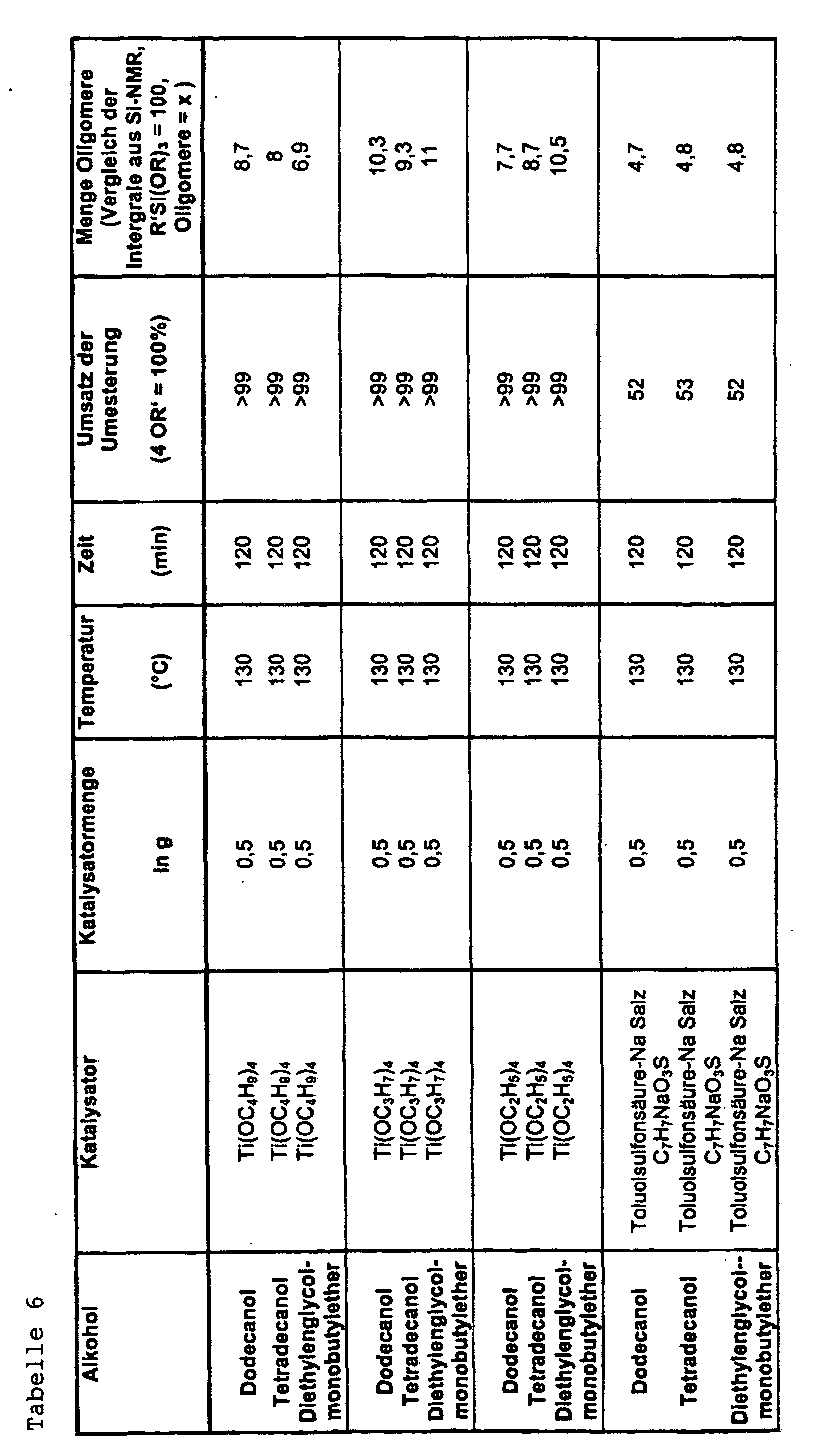

## Patentansprüche

1. Organosiliciumverbindungen der allgemeinen Formel I und / oder II 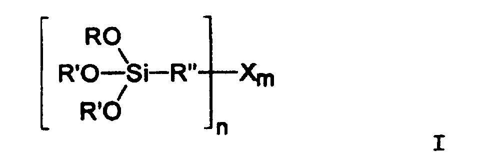 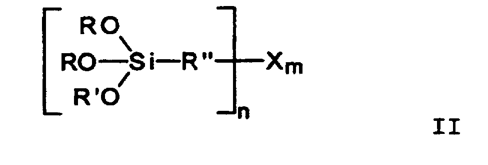 wobei
R eine Methyl- oder Ethyl-Gruppe ist,
R' gleich oder verschieden und eine C₉-C₃₀ verzweigte oder unverzweigte einbindige Alkyl- oder Alkenyl-Gruppe, Arylgruppe, Aralkylgruppe, verzweigte oder unverzweigte C₂-C₃₀ Alkylethergruppe, verzweigte oder unverzweigte C₂-C₃₀ Alkylpolyethergruppe oder R'''₃Si, mit R'''gleich C₁-C₃₀ verzweigte oder unverzweigte Alkyl- oder Alkenyl-Gruppe, Aralkylgruppe oder Arylgruppe, ist,
R" eine verzweigte oder unverzweigte, gesättigte oder ungesättigte, aliphatische, aromatische oder gemischt aliphatische / aromatische zweibindige C₁-C₃₀ Kohlenwasserstoffgruppe ist,
X ist SH mit n=1 und m=1.

2. Organosiliciumverbindungen gemäß Anspruch 1, **dadurch gekennzeichnet, daß** R" CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ oder 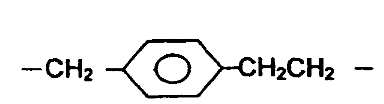 bedeutet.

3. Verfahren zur Herstellung der erfindungsgemäßen Organosiliciumverbindungen gemäß Anspruch 1, **dadurch gekennzeichnet, daß** man Silane der allgemeinen Formel III 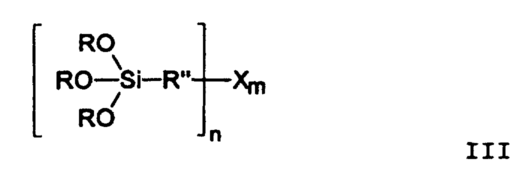 in der R, R", X, m und n die oben angegebene Bedeutung aufweisen, mit Alkoholen der allgemeinen Formel R'-OH, in der R' die oben angegebene Bedeutung aufweist, unter Abspaltung von R-OH, umsetzt und R-OH durch Destillation kontinuierlich vom Reaktionsgemisch abtrennt.

4. Verfahren gemäß Anspruch 3, **dadurch gekennzeichnet, daß** man als Katalysator Salzsäure, Schwefelsäure, Phosphorsäure, Ameisensäure, Essigsäure, para-Toluolsulfonsäure, Natronlauge, Kalilauge, Natriummethylat, Natriumethylat, Deloxan ASP I/9, Ionenaustauscherharze Amberlyst 15 verwendet.

5. Verfahren gemäß Anspruch 3, **dadurch gekennzeichnet, daß** man als Katalysator Metallverbindungen verwendet.

6. Verfahren gemäß Anspruch 3, **dadurch gekennzeichnet, daß** man die Umsetzung bei Temperaturen zwischen 20 und 200 °C durchführt.

7. Verfahren gemäß Anspruch 3, **dadurch gekennzeichnet, daß** man die Reaktion in einer wasserfreien Inertgasatmosphäre durchführt.

8. Kautschukmischungen, **dadurch gekennzeichnet, daß** sie Kautschuk, Füllstoff, gegebenenfalls weitere Kautschukhilfsmittel, sowie mindestens eine erfindungsgemäße Organosiliciumverbindung gemäß Anspruch 1 enthalten.

9. Verwendung von Organosiliciumverbindungen gemäß Anspruch 1 zur Herstellung von Formkörpern.

10. Verwendung von Organosiliciumverbindungen gemäß Anspruch 1 in Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Organosilicon compounds of the general formula I and/or II 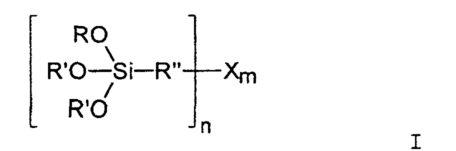 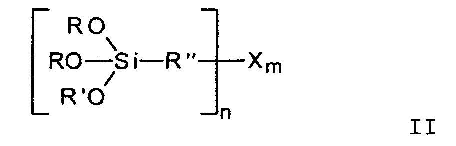 wherein
R is a methyl or ethyl group,
R' is identical or different and is a C₉-C₃₀ branched or unbranched monovalent alkyl or alkenyl group, aryl group, aralkyl group, branched or unbranched C₂-C₃₀ alkyl ether group, branched or unbranched C₂-C₃₀ alkyl polyether group or R'''₃Si, where R''' is C₁-C₃₀ branched or unbranched alkyl or alkenyl group, aralkyl group or aryl group,
R" is a branched or unbranched, saturated or unsaturated, aliphatic, aromatic or mixed aliphatic/aromatic divalent C₁-C₃₀ hydrocarbon group, X is SH where n = 1 and m = 1.

2. Organosilicon compounds according to claim 1, **characterised in that** R" means CH₂, CH₂CH₂, CH₂CH₂CH₂, CH₂CH₂CH₂CH₂, CH(CH₃), CH₂CH(CH₃), C(CH₃)₂, CH(C₂H₅), CH₂CH₂CH(CH₃), CH₂CH(CH₃)CH₂ or

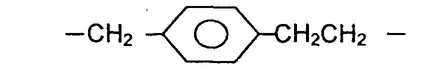

3. A process for the production of the organosilicon compounds of the invention according to claim 1, **characterised in that** silanes of the general formula III 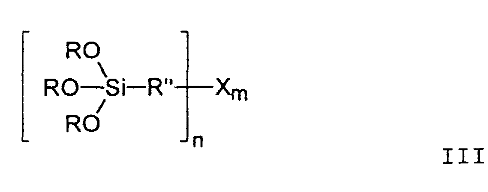 in which R, R", X, m and n have the above-stated meaning, are reacted with alcohols of the general formula R'-OH, in which R' has the above-stated meaning, with elimination of R-OH, and R-OH is continuously separated from the reaction mixture by distillation.

4. A process according to claim 3, **characterised in that** hydrochloric acid, sulfuric acid, phosphoric acid, formic acid, acetic acid, para-toluenesulfonic acid, sodium hydroxide solution, potassium hydroxide solution, sodium methylate, sodium ethylate, Deloxan ASP I/9, Amberlyst 15 ion exchange resins are used as catalyst.

5. A process according to claim 3, **characterised in that** metal compounds are used as catalyst.

6. A process according to claim 3, **characterised in that** the reaction is performed at temperatures of between 20 and 200°C.

7. A process according to claim 3, **characterised in that** the reaction is performed in an anhydrous, inert gas atmosphere.

8. Rubber mixtures, **characterised in that** they contain rubber, filler, optionally further rubber auxiliary substances, as well as at least one organosilicon compound of the invention according to claim 1.

9. Use of organosilicon compounds according to claim 1 for the production of mouldings.

10. Use of organosilicon compounds according to claim 1 in pneumatic tyres, tyre treads, cable sheathing, hoses, drive belts, conveyor belts, roll covers, tyres, shoe soles, sealing rings and damping components.

## Revendications

1. Composés organosiliciés de formule générale I et/ou II 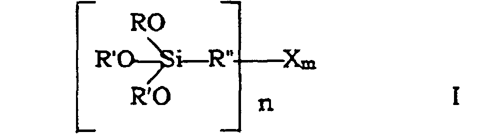 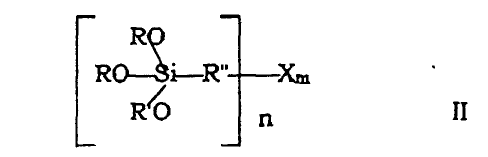 dans laquelle
R représente un groupe méthyle ou éthyle,
R' est identique ou différent et représente un groupe alkyle ou alcényle à une liaison en C₉ à C₃₀ ramifié ou linéaire, un groupe aryle, un groupe aralkyle, un groupe alkyléther en C₂ à C₃₀ ramifié ou linéaire, un groupe alkylpolyéther en C₂ à C₃₀ ramifié ou linéaire ou R'''₃Si avec R''' égale à un groupe alkyle ou alcényle ramifié ou linéaire en C₁ à C₃₀, un groupe aralkyle ou aryle,
R" un groupe hydrogène en C₁ à C₃₀ à deux liaisons ramifié ou linéaire, saturé ou insaturé, aliphatique, aromatique ou mixte aliphatique/aromatique,
X représente SH avec n = 1 et m = 1.

2. Composés organosiliciés selon la revendication 1,
**caractérisés en ce que**
R" représente CH₂, CH₂CH₂, CH₂CH₂CH₂, CH₂CH₂CH₂CH₂; CH(CH₃), CH₂CH(CH₃), C(CH₃)₂, CH(C₂H₅), CH₂CH₂CH(CH₃), CH₂CH(CH₃)CH₂ ou

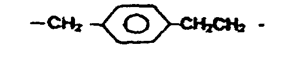

3. Procédé de production des composés organosiliciés de l'invention selon la revendication 1,
**caractérisé en ce qu'**
on fait réagir des silanes de formule générale III 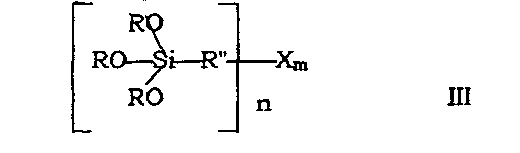 dans laquelle R, R", X, m et n prennent la signification indiquée ci-dessus, avec des alcools de formule générale R'-OH, dans laquelle R' prend la signification indiquée ci-dessus, avec fission de R-OH, et on sépare R-OH en continu du mélange réactionnel par distillation.

4. Procédé selon la revendication 3,
**caractérisé en ce qu'**
comme catalyseur, on utilise de l'acide chlorhydrique, de l'acide sulfurique, de l'acide phosphorique, de l'acide formique, de l'acide acétique, de l'acide para-toluène sulfonique, de la lessive de soude, de la potasse caustique, du méthylate de sodium, de l'éthylate de sodium, du Deloxan ASP 1/9, des résines échangeuses d'ions Amberlyst 15.

5. Procédé selon la revendication 3,
**caractérisé en ce que**
comme catalyseur on utilise des composés métalliques.

6. Procédé selon la revendication 3,
**caractérisé en ce que**
la conversion s'effectue à des températures comprises entre 20 et 200°C.

7. Procédé selon la revendication 3,
**caractérisé en ce que**
la réaction s'effectue sous gaz inerte anhydre.

8. Mélanges de caoutchoucs,
**caractérisés en ce qu'**
ils contiennent du caoutchouc, une charge, le cas échéant d'autres agents auxiliaires du caoutchouc, ainsi qu'au moins un composé organosilicié de l'invention selon la revendication 1.

9. Utilisation de composés organosiliciés selon la revendication 1, pour la fabrication de corps moulés.

10. Utilisation de composés organosiliciés selon la revendication 1, dans des pneus à air, des bandes de roulement de pneus, des gaines de câbles, des tuyaux, des courroies de transmission, des bandes transporteuses, des revêtements de rouleaux, des pneus, des semelles de chaussures, des bagues d'étanchéité et des éléments d'amortissement.
